# NEUE EUROPÄISCHE PATENTSCHRIFT

(11) **EP 2 162 328 B2**
(45) Veröffentlichungstag und Bekanntmachung des Hinweises auf die Entscheidung über den Einspruch: **10.02.2021**
(45) Hinweis auf die Patenterteilung: 31.10.2018
(21) Anmeldenummer: 08718041.0
(22) Anmeldetag: 19.03.2008
(51) Int. Cl.: B60T 7/12

(54) **AUTOMATISCHE FESTSTELLBREMSE MIT SCHLUPFREGLER**
AUTOMATIC PARKING BRAKE WITH SLIP CONTROLLER
FREIN DE STATIONNEMENT AUTOMATIQUE À RÉGULATEUR DE GLISSEMENT

(30) Priorität: 14.05.2007 DE 102007022510
(43) Veröffentlichungstag der Anmeldung: 17.03.2010
(73) Patentinhaber: Robert Bosch GmbH, 70442 Stuttgart (DE)
(72) Erfinder: BAEHRLE-MILLER, Frank, 71101 Schoenaich (DE); BLATTERT, Dieter, 74366 Kirchheim/Neckar (DE); BOGRAD, Vitaliy, 74321 Bietigheim-Bissingen (DE)
(86) Internationale Anmeldenummer: PCT/EP2008/053320
(87) Internationale Veröffentlichungsnummer: WO 2008/138668

(56) Entgegenhaltungen:
- EP-A- 0 467 112
- EP-A2- 1 557 334
- WO-A-2004/054862
- WO-A-2007/068571
- WO-A1-99/38738
- DE-A1- 4 421 565
- GB-B- 2 349 676
- US-A- 3 918 766
- US-A- 5 139 315
- US-A- 6 050 655
- US-A1- 2002 117 891
- US-B2- 6 502 029
- US-B2- 6 860 570
- US-B2- 6 880 900

## Beschreibung

### Stand der Technik

Die Erfindung betrifft eine automatische Feststellbremse für Kraftfahrzeuge gemäß dem Oberbegriff des Patentanspruchs 1, ein Verfahren zur Schlupfregelung gemäß dem Oberbegriff des Patentanspruchs 6, sowie ein Steuergerät mit einem Schlupfregler gemäß dem Oberbegriff des Patentanspruchs 10.

Automatische Feststellbremsen bzw. Parkbremsen (APB) umfassen üblicherweise ein Bedienelement, wie z.B. einen Taster, mit dem die Feststellbremse verriegelt oder gelöst werden kann. Bei einer Betätigung des Bedienelements erkennt ein damit verbundenes Steuergerät den Feststellbremswunsch und steuert entsprechend ein Stellglied, wie z.B. eine Hydraulikpumpe oder einen Elektromotor an, um an den Rädern des Fahrzeugs Bremskraft aufzubauen oder die Bremse zu lösen.

Im Folgenden werden solche Systeme betrachtet, bei denen sich Elektromotoren (mit Getrieben) direkt an den Radbremsen (sog. "Motor on Caliper") befinden. Derartige Feststellbrems-Systeme sind in der Regel so ausgelegt, dass sie vom Fahrer sowohl im Stillstand des Fahrzeugs als auch während der Fahrt betätigt werden können. Die Möglichkeit einer Betätigung während des Fahrbetriebs ist insbesondere zu dem Zweck vorgesehen, das Fahrzeug im Falle einer defekten Betriebsbremse noch abbremsen zu können. In diesem Fall wird das Fahrzeug mit einer vorgegebenen Verzögerung, z.B. 3 m/s² abgebremst. Die Verzögerung des Fahrzeugs erfolgt dabei meist geregelt.

Ein Problem derartiger Feststellbrems-Systeme mit Elektromotoren besteht darin, dass die Ansprechgeschwindigkeit der mechanischen Komponenten wesentlich langsamer ist als bei einem hydraulischen Feststellbrems-System. Daraus ergibt sich eine relativ schlechte Regelbarkeit der elektromechanischen Systeme. Dies kann dazu führen, dass die gebremsten Räder während der Regelung zu lange blockieren. Ein Fahrzeug kann daher in einer kritischen Fahrsituation, wie z. B. beim Über- oder Untersteuern in einer Kurvenfahrt, die Seitenführungskraft verlieren. Das Dokument WO2004/054862 A1 beschreibt ein Verfahren ohne Radindividuelle Schlupfregelung ein Blockieren der durch die Feststellbremse abgebremsten Rädern durch Bremsmomentreduktion zu Verhindern.

### Offenbarung der Erfindung

Es ist somit die Aufgabe der vorliegenden Erfindung, eine elektromechanische Feststellbremse zu schaffen, die besser regelbar ist und dennoch eine vorgegebene Verzögerung des Fahrzeugs erreicht.

Gelöst wird diese Aufgabe gemäß der Erfindung durch die im Patentanspruch 1, 4 und 7 angegebenen Merkmale. Weitere Ausgestaltungen der Erfindung sind Gegenstand von Unteransprüchen.

Ein wesentlicher Aspekt der Erfindung besteht darin, an den gebremsten Rädern eine Schlupfregelung durchzuführen und den entsprechenden Regler derart auszulegen, dass bei der Schlupfregelung an einem ersten Rad der Radschlupf eines zweiten Rades berücksichtigt wird. Je nach Höhe des Radschlupfes des anderen Rades wird entschieden, ob die Bremskraft am geregelten (ersten) Rad erhöht werden kann oder nicht. Somit wird ausgeschlossen, dass beide Räder gleichzeitig blockieren bzw. einen zu hohen Schlupf aufweisen. Die Seitenführungskraft bleibt daher zumindest an einem Rad erhalten.

Das erfindungsgemäß berücksichtigte andere Rad ist vorzugsweise das auf der gegenüberliegenden Fahrzeugseite angeordnete Rad derselben Achse.

Gemäß einer bevorzugten Ausführungsform der Erfindung wird der Radschlupf eines anderen Rades ermittelt und eine Erhöhung der Bremskraft am geregelten (ersten) Rad nur dann zugelassen, wenn der Radschlupf des anderen Rades kleiner ist als ein vorgegebener Schwellenwert. Der Schwellenwert kann beispielsweise zwischen 3% und 5%, insbesondere bei etwa 4% Radschlupf liegen. Somit kann erreicht werden, dass beide Räder nicht gleichzeitig blockieren und weiterhin Seitenführungskraft aufnehmen können.

Der erfindungsgemäße Schlupfregler ist vorzugsweise auch derart ausgelegt, dass die Bremskraft am geregelten Rad nur erhöht wird, wenn der Radschlupf an diesem Rad kleiner ist als ein vorgegebener Schwellenwert. Dieser Schwellenwert kann ebenfalls bei etwa 4% liegen. Wenn der Radschlupf dagegen größer ist als der Schwellenwert, wird die Bremskraft vorzugsweise verringert.

Gemäß einer speziellen Ausführungsform der Erfindung wird bei der Schlupfregelung ferner noch die Verzögerung des Fahrzeugs berücksichtigt. In diesem Fall wird eine Erhöhung der Bremskraft am geregelten Rad nur zugelassen, wenn die Verzögerung des Fahrzeugs betragsmäßig kleiner ist als ein vorgegebener Schwellenwert. Andernfalls wird die Bremskraft vorzugsweise gleich belassen.

Nach dem Auslösen einer Bremsung wird die Regelung am linken und rechten Rad vorzugsweise asynchron gestartet. D.h., die Ansteuerung der Elektromotoren erfolgt zeitverzögert. Dies hat positive Auswirkungen auf das Regelverhalten, da sich dadurch die Gefahr eines schwingenden Systems, bei dem beide Radbremsen synchron geöffnet oder geschlossen werden, reduziert.

Der erfindungsgemäße Schlupfregler ist vorzugsweise als Software-Algorithmus in einem Steuergerät integriert, das mit Rad-Drehzahlsensoren und gegebenenfalls einem Beschleunigungssensor verbunden ist und die Elektromotoren der Feststellbremse wie vorstehend beschrieben ansteuert.

### Kurze Beschreibung der Zeichnungen

Die Erfindung wird nachstehend anhand der beigefügten Zeichnungen beispielhaft näher erläutert. Es zeigen:
- Fig. 1: eine schematische Darstellung einer Kfz-Bremsanlage mit einer automatischen Feststellbremse; und
- Fig. 2: ein Flussdiagramm zur Darstellung der Regelstrategie der Schlupfregelung.

### Ausführungsformen der Erfindung

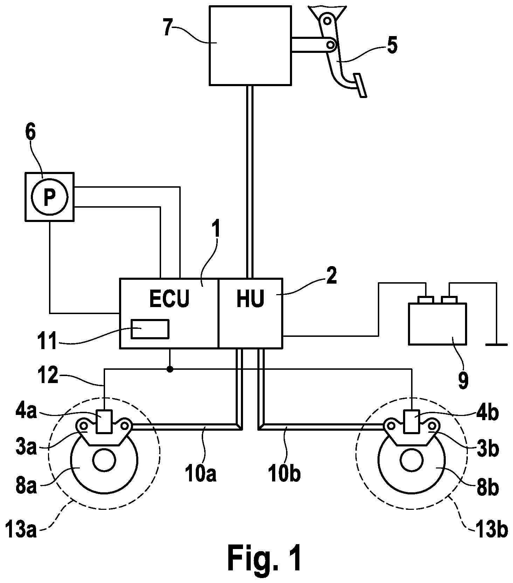

Fig. 1 zeigt eine Blockdarstellung einer hydraulischen Bremsanlage mit einer automatischen Feststellbremse. Die Bremsanlage umfasst in bekannter Weise ein Fuß-Bremspedal 5, das über einen Bremskraftverstärker mit einem Hauptbremszylinder (zusammengefasst in Block 7) zusammen wirkt. Der vom Fahrer erzeugte und verstärkte Bremsdruck wird über eine Hydraulikeinheit 2 (Hydroaggregat), die zur Durchführung einer Schlupfregelung ausgelegt ist, und Bremsleitungen 10a, 10b zu den Radbremsen 3,8 geleitet. Die Radbremsen 3,8 sind hier als Scheibenbremsen realisiert, die jeweils einen Bremssattel 3 und eine Bremsscheibe 8 umfassen.

Die automatische Feststellbremse umfasst ein Bedienelement 6 (z.B. einen Taster) zum Aktivieren bzw. Deaktivieren der Feststellbremse, ein mit dem Taster 6 verbundenes Steuergerät 1, in dem ein Feststellbrems-Algorithmus mit einem Schlupfregler 11 hinterlegt ist und mehrere Elektromotoren 4a,4b, die jeweils an einem Bremssattel 3a bzw. 3b montiert sind (Motor on Caliper). Die Anordnung wird von einer Batterie 9 mit Spannung versorgt.

Um das Fahrzeug im geparkten Zustand zu sichern, betätigt der Fahrer kurz den Taster 6. Das Steuergerät 1 erkennt dies als Feststellbremswunsch und steuert daraufhin die an den Bremssätteln 3 befindlichen Elektromotoren an, um Bremskraft aufzubauen und die Bremsbacken zu verriegeln. Wenn sich die Elektromotoren 4 in der verriegelten Stellung befinden, werden die Bremskolben daran gehindert, zurück in die Ausgangsposition zu gelangen, so dass die Bremsen zugespannt bleiben.

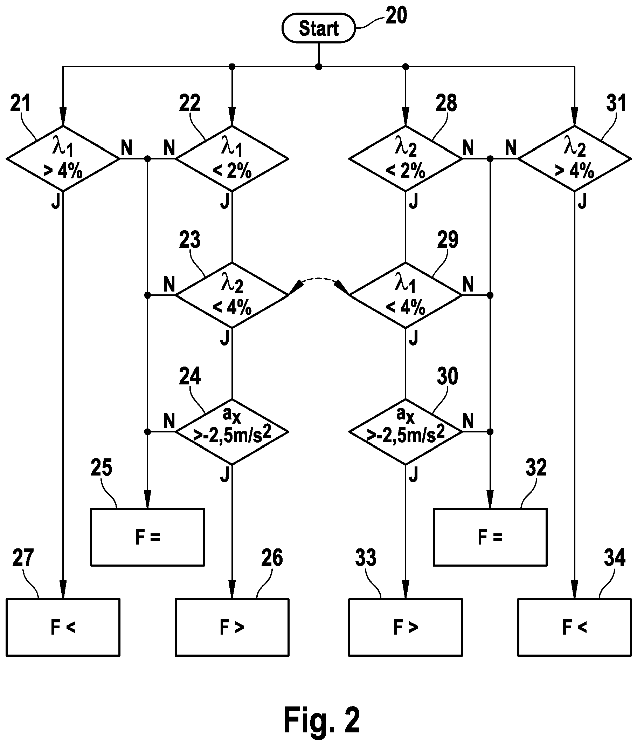

Bei einer Betätigung des Tasters 6 während der Fahrt wird dies vom Steuergerät 1 als Bremswunsch interpretiert. Das Steuergerät 1 steuert daraufhin die Aktuatoren 4 derart an, dass das Fahrzeug mit einer vorgegebenen Verzögerung, z.B. 3 m/s² abgebremst wird. Wenn die Räder bei einer solchen Notbremsung, z.B. aufgrund einer glatten Fahrbahn, blockieren, wird eine radindividuelle Schlupfregelung an den Rädern 13a bzw. 13b durchgeführt, wie sie beispielhaft in Fig. 2 dargestellt ist.

Fig. 2 zeigt ein Flussdiagramm zur Darstellung einer Regelstrategie für die Schlupfregelung der Räder 13a,13b bei einer Notbremsung mittels der Feststellbremse. Bei den Rädern 13a,13b handelt es sich um die Räder der Hinterachse. Das Verfahren ist für beide Räder 13a,13b identisch, so dass im Folgenden nur auf den linken Teil des Flussdiagramms eingegangen wird.

Sobald der Fahrer in Schritt 20 den Taster 6 betätigt hat, werden die Aktuatoren 4a, 4b angesteuert, um das Fahrzeug abzubremsen. In den Schritten 21 und 22 wird dann der Schlupf des Rades 13a überprüft. Falls der Schlupf λ₁ in Schritt 21 größer ist als z.B. 4%, wird in Schritt 27 die Klemmkraft der Bremse 3a,8a verringert. Falls der λ₁ kleiner als 4% und größer als 2% ist (N in Schritt 21 und 22) - dies entspricht dem idealen Bereich zwischen 2% und 4% - erfolgt keine Änderung der Klemmkraft (Schritt 25). Wenn der Schlupf λ₁ dagegen kleiner ist als 2% (J in Schritt 22) und somit theoretisch die Klemmkraft an diesem Rad weiter erhöht werden könnte, wird in Schritt 23 zunächst der Schlupf λ₂ des anderen Rades 13b berücksichtigt. Dies wird durch einen Pfeil, der die Wechselwirkung zwischen den beiden Rädern darstellt, verdeutlicht. Wenn der Schlupf λ₂ des anderen Rades 13b größer ist als 4% (N in Schritt 23) erfolgt keine Klemmkraftänderung (Schritt 25), da das andere Rad 13b bereits hohen Schlupf aufweist. Falls der Schlupf des anderen Rades 13b dagegen kleiner ist als 4% (J in Schritt 23), könnte die Klemmkraft am Rad 13a theoretisch erhöht werden, ohne die Seitenführung zu verlieren. Hier wird jedoch in Schrit 24 noch zusätzlich die Verzögerung des Fahrzeugs überprüft. Ist die Beschleunigung aₓ größer als -2,5 m/s², (also beispielsweise -1 m/s²) so kann die Klemmkraft in Schritt 26 weiter erhöht werden. Ist die Beschleunigung aₓ dagegen kleiner als -2,5 m/s² (N in Schritt 25), erfolgt keine Klemmkraftänderung an der Bremse 3a,8a.

Ein wesentlicher Vorteil dieses Verfahrens besteht darin, dass zumindest eines der Räder einen geringen Schlupf aufweist und somit ausreichend Seitenführungskraft aufnehmen kann. Dieses Verfahren wird für das zweite Rad 13b unter Berücksichtigung des Radschlupfes des ersten Rades 13a analog durchgeführt.

Nach dem Auslösen der Bremsung durch Betätigung des Tasters 6 wird die Regelung am linken bzw. Rad 13a bzw. 13b vorzugsweise asynchron gestartet. Die Ansteuerung der entsprechenden Aktuatoren 4a,4b kann links/rechts beispielsweise 150 ms zeitverzögert erfolgen. Dies hat positive Auswirkungen auf das Regelverhalten, da sich durch das zeitversetzte Ansteuern die Gefahr eines schwingenden Systems, bei dem beide Radbremsen synchron geöffnet oder geschlossen werden, reduziert.

## Patentansprüche

1. Automatische Feststellbremse für Kraftfahrzeuge mit mehreren Bremsaktuatoren (4a, 4b), die am Bremssattel (3a, 3b) angeordnete Elektromotoren (4a, 4b) sind, und einem Bedienelement (6) zum Betätigen der Feststellbremse, **dadurch gekennzeichnet, dass** die Bremsaktuatoren (4a, 4b) mit einem Regler (1, 11) verbunden sind, der in bestimmten Fahrsituationen eine radindividuelle Schlupfregelung durchführen kann, wobei der Regler (1, 11) derart ausgelegt ist, dass bei einer Schlupfregelung an einem ersten Rad (13a) der Schlupf (λ₂) eines zweiten Rades (13b) berücksichtigt wird, wobei die Klemmkraft am ersten Rad (13a) nur erhöht wird, wenn der Schlupf (λ₂) des zweiten Rades (13b) kleiner ist als ein vorgegebener Schwellenwert.

2. Automatische Feststellbremse nach Anspruch 1 **dadurch gekennzeichnet, dass** der Schwellenwert zwischen 3% und 5%, insbesondere bei etwa 4% liegt.

3. Automatische Feststellbremse nach einem der vorhergehenden Ansprüche, **dadurch gekennzeichnet, dass** das zweite Rad (13b) auf der anderen Fahrzeug-Längsseite angeordnet ist.

4. Verfahren zur Schlupfregelung der Räder (13a, 13b) eines Fahrzeugs nach dem Auslösen einer Bremsung mittels einer automatischen, elektromechanischen Feststellbremse, **dadurch gekennzeichnet, dass** bei der Durchführung einer radindividuellen Schlupfregelung an einem ersten Rad (13a) der Radschlupf (λ₂) eines zweiten Rades (13b) berücksichtigt wird, wobei die Klemmkraft am ersten Rad (13a) nur erhöht wird, wenn der Radschlupf (λ₂) des zweiten Rades (13b) kleiner ist als ein vorgegebener Schwellenwert.

5. Verfahren nach Anspruch 4, **dadurch gekennzeichnet, dass** die Klemmkraft am ersten Rad (13a) nur erhöht wird, wenn der Radschlupf (λ₁) an diesem Rad kleiner ist als ein vorgegebener Schwellenwert.

6. Verfahren nach einem der Ansprüche 4 oder 5, **dadurch gekennzeichnet, dass** die Bremskraft nur erhöht wird, wenn die Verzögerung (aₓ) des Fahrzeugs betragsmäßig kleiner ist als ein vorgegebener Schwellenwert.

7. Steuergerät (1) mit einem Schlupfregler (11), der Mittel zum Durchführen einer radindividuellen Schlupfregelung gemäß einem der vorhergehenden Verfahrensansprüche umfasst.

## Claims

1. Automatic parking brake for motor vehicles having multiple brake actuators (4a, 4b), which are electric motors (4a, 4b) arranged on the brake calliper (3a, 3b), and having an operator control element (6) for actuating the parking brake, **characterized in that** the brake actuators (4a, 4b) are connected to a regulator (1, 11) which can perform wheel-specific slip regulation in particular driving situations, wherein the regulator (1, 11) is configured such that, in slip regulation at a first wheel (13a), the slip (λ₂) of a second wheel (13b) is taken into consideration, wherein the clamping force at the first wheel (13a) is increased only if the slip (λ₂) of the second wheel (13b) is below a predefined threshold value.

2. Automatic parking brake according to Claim 1, **characterized in that** the threshold value lies between 3% and 5%, in particular is approximately 4%.

3. Automatic parking brake according to one of the preceding claims, **characterized in that** the second wheel (13b) is arranged on the other longitudinal side of the vehicle.

4. Method for regulating the slip of the wheels (13a, 13b) of a vehicle after the initiation of a braking operation by means of an automatic, electromechanical parking brake, **characterized in that**, in the performing of wheel-specific slip regulation at a first wheel (13a), the wheel slip (λ₂) of a second wheel (13b) is taken into consideration, wherein the clamping force at the first wheel (13a) is increased only if the wheel slip (λ₂) of the second wheel (13b) is below a predefined threshold value.

5. Method according to Claim 4, **characterized in that** the clamping force at the first wheel (13a) is increased only if the wheel slip (λ₁) at said wheel is below a predefined threshold value.

6. Method according to one of Claims 4 and 5, **characterized in that** the braking force is increased only if the deceleration (aₓ) of the vehicle is, in terms of magnitude, below a predefined threshold value.

7. Control unit (1) having a slip regulator (11) which comprises means for performing wheel-specific slip regulation in accordance with one of the preceding method claims.

## Revendications

1. Frein de stationnement automatique pour véhicules automobiles, présentant plusieurs actionneurs de frein (4a, 4b), qui sont des moteurs électriques (4a, 4b) disposés sur l'étrier de frein (3a, 3b), et un élément d'actionnement (6) servant à actionner le frein de stationnement,
**caractérisé en ce que**
les actionneurs de frein (4a, 4b) sont reliés à un régulateur (1, 11) qui peut effectuer une régulation du patinage individuelle pour chaque roue dans des situations définies de conduite et
le régulateur (1, 11) étant conçu de telle sorte que dans une régulation du patinage au niveau d'une première roue (13a), le patinage (λ₂) d'une deuxième roue (13b) est pris en compte, la force de serrage appliquée sur la première roue (13a) n'étant augmentée que si le patinage (λ₂) de la deuxième roue (13b) est inférieur à une valeur de seuil prédéterminée.

2. Frein de stationnement automatique selon la revendication 1, **caractérisé en ce que** la valeur de seuil est située entre 3 % et 5 % et en particulier vaut environ 4 %.

3. Frein de stationnement automatique selon l'une des revendications précédentes, **caractérisé en ce que** la deuxième roue (13b) est disposée sur l'autre côté longitudinal du véhicule.

4. Procédé de régulation du patinage des roues (13a, 13b) d'un véhicule après le déclenchement d'un freinage au moyen d'un frein de stationnement électromécanique automatique,
**caractérisé en ce que**
lorsqu'une régulation du patinage individuelle pour chaque roue est réalisée sur une première roue (13a), le patinage (λ₂) d'une deuxième roue (13b) est pris en compte, la force de serrage appliquée sur la première roue (13a) n'étant augmentée que si le patinage (λ₂) de la deuxième roue (13b) est inférieur à une valeur de seuil prédéterminée.

5. Procédé selon la revendication 4, **caractérisé en ce que** la force de serrage appliquée sur la première roue (13a) n'est augmentée que si le patinage (λ₁) au niveau de cette roue est inférieur à une valeur de seuil prédéterminée.

6. Procédé selon l'une des revendications 4 et 5, **caractérisé en ce que** la force de freinage n'est augmentée que si la valeur absolue du ralentissement (aₓ) du véhicule est inférieure à une valeur de seuil prédéterminée.

7. Appareil de commande (1) doté d'un régulateur de patinage (11) qui comporte des moyens permettant de mettre en œuvre une régulation du patinage individuelle pour chaque roue selon l'une des revendications de procédé qui précèdent.
